# EUROPEAN PATENT APPLICATION

(11) **EP 2 602 759 A2**
(43) Date of publication of application: **12.06.2013**
(21) Application number: 12195664.3
(22) Date of filing: 05.12.2012
(51) Int. Cl.: G06Q 50/00, G06F 3/0481

(54) **Electronic device, social tile displaying method, and tile connection method**

(30) Priority: 06.12.2011 TW 100144787; 08.03.2012 TW 101107829
(71) Applicant: Acer Incorporated, Taipei Hsien 221 (TW)
(72) Inventor: Feng, Chia-Hui, 221 Taipei Hsien (TW); Chen, Ting-Pang, 221 Taipei Hsien (TW); Huang, Pin-Hsun, 221 Taipei Hsien (TW); Yeh, Li-Fen, 221 Taipei Hsien (TW); Liu, Yi-Hsun, 221 Taipei Hsien (TW); Yen, Li, 221 Taipei Hsien (TW)
(74) Representative: Michalski Hüttermann & Partner Patentanwälte

(57) **Abstract**

Social tile displaying method is provided. A first dynamic tile group is displayed on a display screen. In response to a pin instruction for designating a first contact person, a social tile corresponding to the first contact person is generated along with the first dynamic tile group on the display screen. Automatic notification message corresponding to the first contact person is shown on each of the tiles within the first dynamic tile group. Tile connection method is also provided. First and second tiles are displayed. In response to a connection command, the first and second tiles are connected according to the connection command. Preset processes are performed on the first and second tiles according to characteristics of the first and second tiles.

## Description

### CROSS REFERENCE TO RELATED APPLICATIONS

This application claims priority of Taiwan Patent Application Ser. No. 100144787, filed 12/06/2011, entitled ELECTRONIC APPARATUS AND SOCIAL TILE DISPLAYING METHOD, and priority of Taiwan Patent Application Ser. No. 101107829, filed 3/8/2012, entitled ELECTRONIC DEVICE, SOCIAL TILE DISPLAYING METHOD, AND TILE CONNECTION METHOD. The contents of the application are hereby incorporated by reference.

### BACKGROUND OF THE INVENTION

### Field of the Invention

The disclosure relates generally to user interfaces employed in electronic devices, and more particularly to electronic devices, social tile displaying methods and tile connection methods employed in the user interfaces of the electronic devices.

### Description of the Related Art

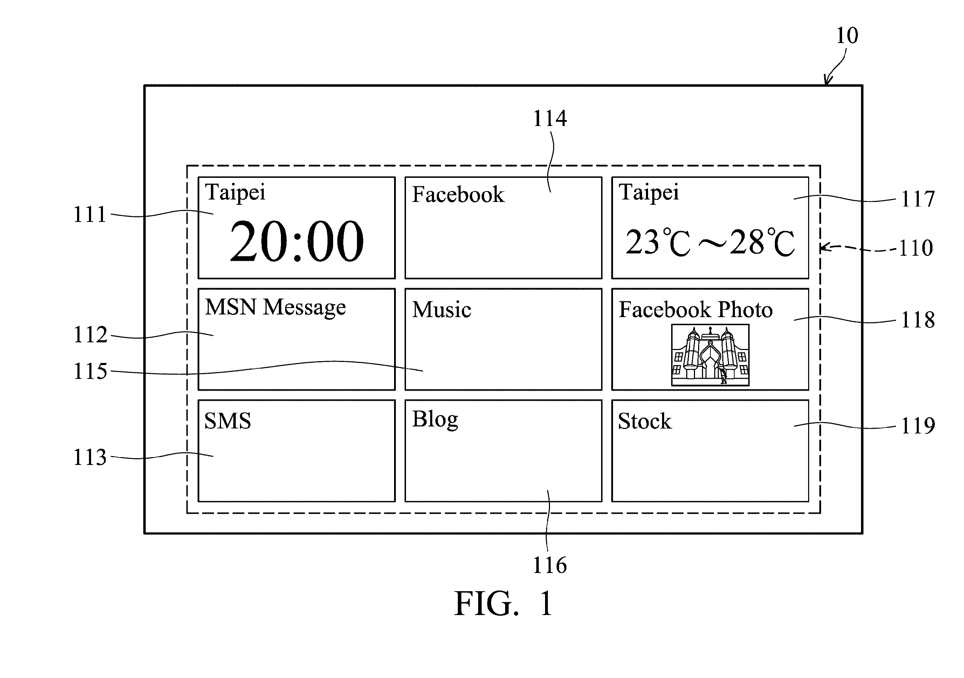

Recently, tile-based display information systems have been released, for example Windows 8^{™} employs a new user interface according to Microsoft's Metro design language (referring to Fig. 1). As shown in Fig. 1, several tiles 111∼119 are displayed on a user start screen 10, and the tiles 111∼119 are arranged into a tile group 110. More than one tile group can be displayed on the user start screen 10. Each tile represents an application, and is able to display relevant information. For example, the tile 115, representing a stock market application, displays current stock prices, and tile 119, representing a weather information application, displays current temperature information. Users can get information pertaining to a particular application without opening the particular application.

According to current tile-based interfaces, each tile operates separately. For tiles within the same tile group and tiles belonging to different tile groups, there is no interaction therebetween.

In order to improve user experience, the present invention provides a method for displaying social tiles and an electronic device employing the method. Using the electronic device and method, tiles displayed on the start screen interact with each other, thus providing a more intuitive user interface that improves user experience.

### BRIEF SUMMARY OF THE INVENTION

An electronic device and a method for displaying social tiles and establishing connection therebetween are provided. Using the electronic device and a method for displaying social tiles and establishing connection therebetween, tiles shown on a user start screen interact and share information, thus an improved user start screen can be obtained.

An electronic device is provided. The electronic device comprises a display unit, an input unit, and a processor. The display unit displays a first tile group comprising a plurality of tiles. The input unit receives a pin command designating a first contact person. The processor generates a social tile corresponding to the first contact person, arranges the generated social tile in the first tile group, and generates display of a current status corresponding to the first contact person, via the tiles within the first tile group.

A social tile displaying method is provided. A first tile group is first displayed on a screen, wherein the first tile group comprises a plurality of tiles. A pin command designating a first contact person is received. A social tile corresponding to the first contact person is generated, and the generated social tile is arranged in the first tile group. The tiles within the first tile group display a current status corresponding to the first contact person.

A tile connecting method is provided. A first tile and a second tile are displayed on a screen. A first connecting command is received for establishing a connection between the first tile and the second tile. The connection between the first tile and the second tile is established according to the first connecting command. A preset operation is executed on the first tile and the second tile according to characteristics of the first tile and the second tile.

An electronic device is provided. The electronic device comprises a display unit, an input unit, and a processor. The display unit displays a first tile and a second tile. The input unit receives a first connecting command for establishing a connection between the first tile and the second tile. The processor establishes the connection between the first tile and the second tile according to the first connecting command, and executes preset operations on the first tile and the second tile according to characteristics of the first tile and the second tile.

### BRIEF DESCRIPTION OF THE DRAWINGS

The invention will become more fully understood by referring to the following detailed description with reference to the accompanying drawings, wherein:

Fig. 1 is a schematic diagram illustrating a user start screen of a tile-based display information system;

Fig. 2 is a schematic diagram illustrating an electronic device according to embodiments of the invention;

Fig. 3 is a flowchart of a first embodiment of a method according to an embodiment of the invention;

Figs. 4A∼4H illustrate graphical user interface displays of an electronic device according to embodiments of the invention;

Fig. 5 illustrates a graphical user interface display of an iPhone system implementing the method of the invention;

Fig. 6 illustrates a graphical user interface display of an Android system implementing the method of the invention;

Figs. 7A∼7C are schematic diagrams illustrating user start screens according to embodiments of the invention;

Fig. 8 is a schematic diagram illustrating an electronic device according to an embodiment of the invention.

### DETAILED DESCRIPTION OF THE INVENTION

Electronic device, social tile displaying method, and tile connection method are provided.

For a better understanding of the aforementioned embodiments of the invention as well as additional embodiments thereof, reference should be made to the description of embodiments below, in conjunction with the following drawings in which like reference numerals refer to corresponding parts throughout the figures.

Embodiments of the present invention can be implemented in an electronic device, which can be a portable electronic device, such as a PDA (Personal Digital Assistant), a mobile phone, a smart phone, or a tablet.

According to embodiments of the present invention, tiles on a display, such as a user start screen, are connected and are able to interact thereamong, thus creating a more intuitive user interface.

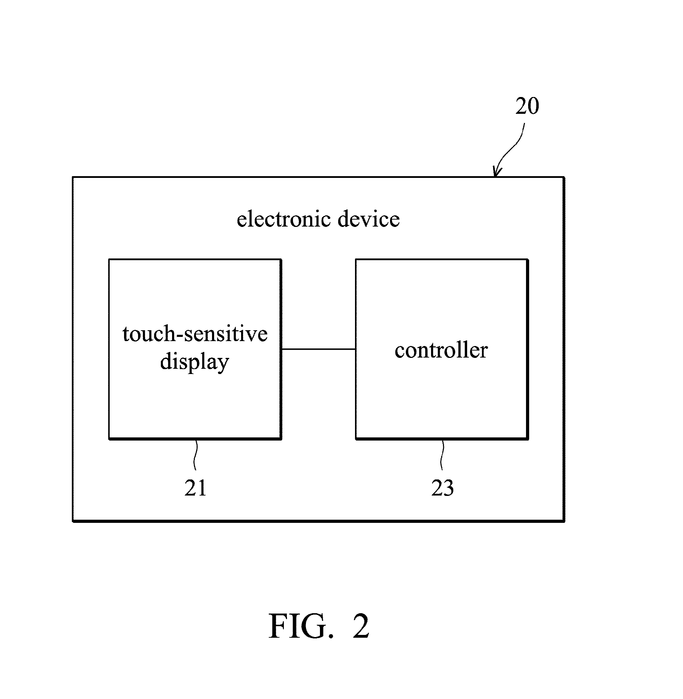

Fig. 2 is a schematic diagram illustrating an electronic device according to embodiments of the invention. The electronic device 20 comprises a touch-sensitive display 21 and a controller 23.

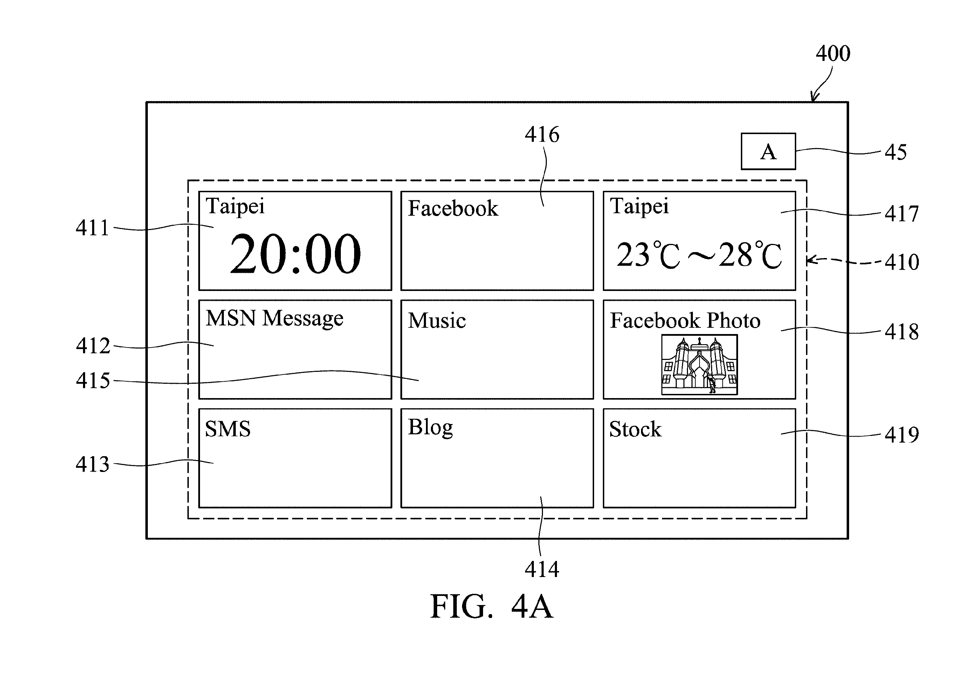

The touch-sensitive display 21 can be implemented using any known or later developed touch-sensitive display. Any device functioning with both a screen and an input device is included in the claimed invention. According to an embodiment, the touch-sensitive display 21 displays at least one tile group, wherein the tile group comprises a plurality of tiles (as shown in Fig. 4A). In addition, the touch-sensitive display 21 detects contact and movement of a control tool, such as a stylus or finger on the touch-sensitive surface. The touch-sensitive display 21 receives inputs corresponding to user manipulation, and transmits the received input to the controller 23 for further processing.

The controller 23 controls the operation of the touch-sensitive display 21, performs the functions of the electronic device 20, and executes the social tile displaying method and tile connecting method of the invention. Related details are discussed later.

Operations and connections pertaining to other elements (not shown) of the electronic device 20 can be implemented by known and future developed techniques.

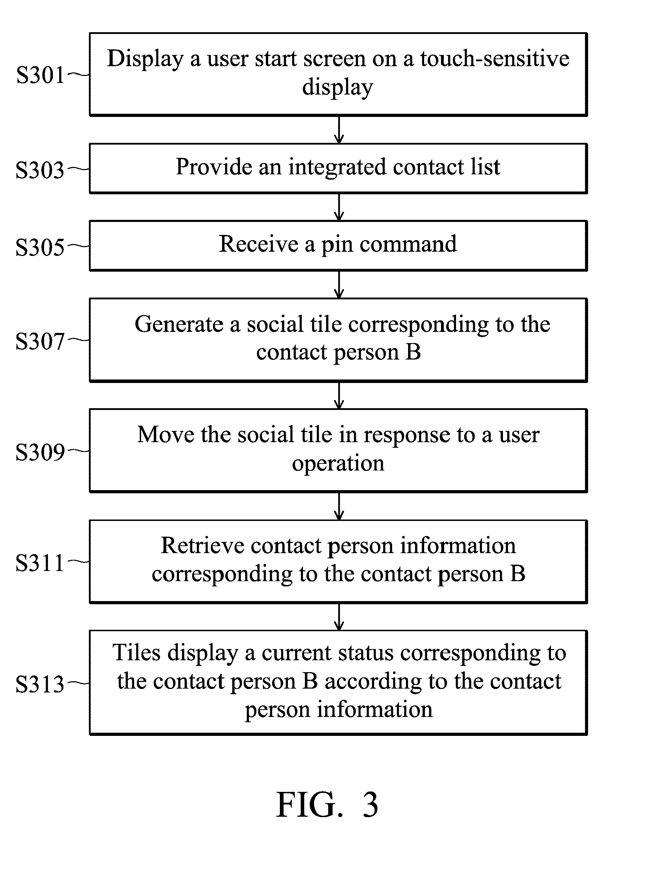

Fig. 3 is a flowchart of a first embodiment of a method according to a first embodiment of the invention. According to this method, at least one social tile is generated on a user start screen of a smart phone, and the social tile is connected to and interacts with other tiles displayed on the user start screen. The smart phone is equipped with a touch-sensitive screen, and the smart phone implements an operation system released by Windows^{™} (i.e., Windows Phone). It should be noted that, though a user start screen of a smart phone is described as an example in the embodiment, the present invention is not limited to this embodiment. The present invention can be implemented in a page of any user interface, such as a page of a user interface shown on a tablet screen.

In step S301, a user start screen is displayed on a touch-sensitive display. Referring to Fig. 4A, block 45 represents a user ID corresponding to a user A. A user start screen 400 displays a plurality of tiles 411∼419, wherein these tiles are arranged in juxtaposition to form a tile group 410. Each of the tiles 411∼419 represents a thumb corresponding to an application program, and shows information pertaining to the application program, thus a user can capture the information directly from the outward appearance of tile. For example, the tile 411 displays local time, the tile 412 displays MSN messages, the tile 413 displays Short Message Service (SMS) messages, the tile 414 displays user blog messages, the tile 415 displays music player messages, the tile 416 displays facebook messages, the tile 417 displays the local weather, the tile 418 displays user facebook account photographs, and tile 419 displays stock market information.

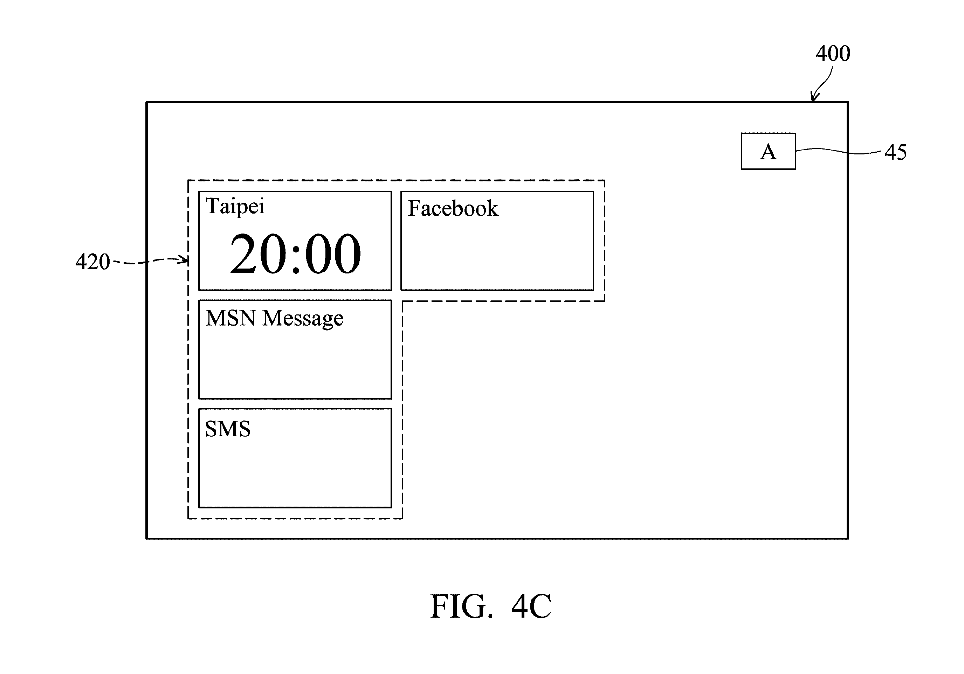

As shown in Fig. 4C, the user start screen displays the tile group 410 and other tile groups, such as tile group 420. Each of the tile groups comprises at least one tile. For instance, a user can finger swipe upwardly to bring up the tile group 410, or switch the screen to the tile group 420.

In step S303, an integrated contact list (list of the contact persons) is provided. The contact list comprises contact person information items. The contact list can be determined by the user, or can be generated, by the system, from information of the contact persons stored on a social network platform.

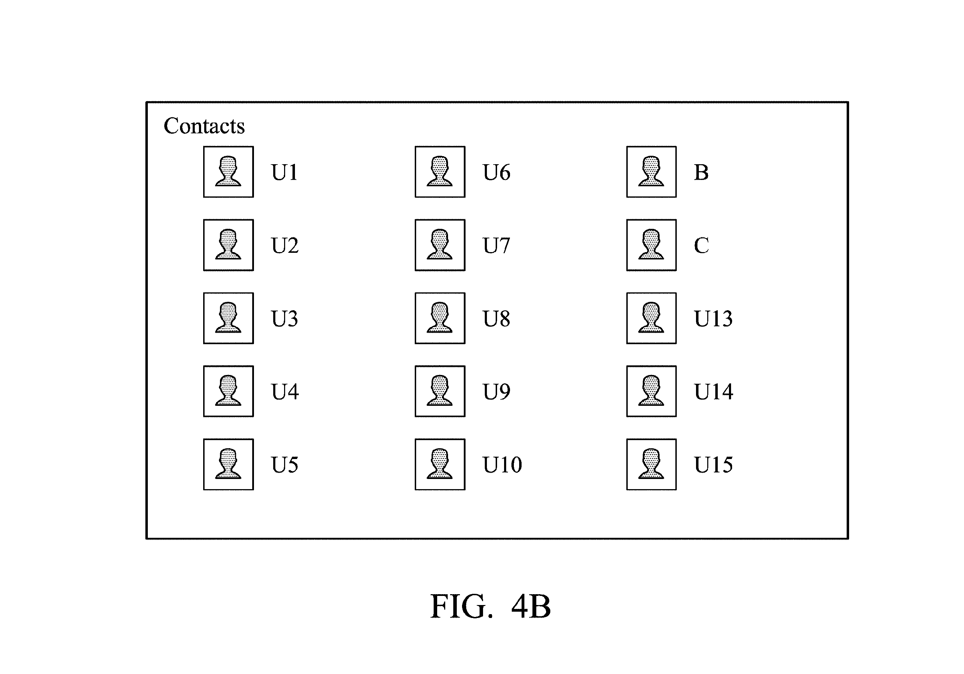

Referring to Fig. 4B, an integrated contact list is provided by the smart phone, and is displayed on the screen for selection. The user can select at least one contact person from the contact list by performing a preset operation.

In step S305, when a user selects a contact person (for example, contact person B) from the contact list and executes a pin operation, a pin command is received by the smart phone system responsively, and the selected contact person B is pinned on the user start screen.

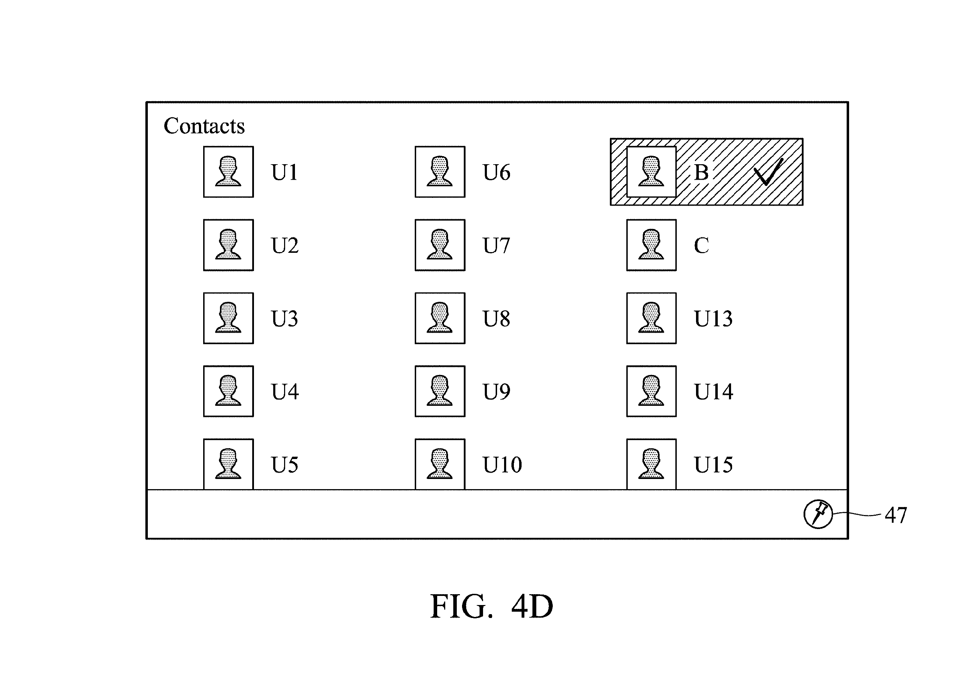

Referring to Fig. 4D, the pinned contact person B is highlighted or checked. In addition, a 'pin button 47' is displayed on a lower right corner of the screen. Though the embodiment described the pinned contact person B as being marked by a highlight or a check, the invention is not limited to this. The selected contact person B can be marked in any way to indicate selection.

In step S307, a social tile corresponding to the contact person B is generated on the screen.

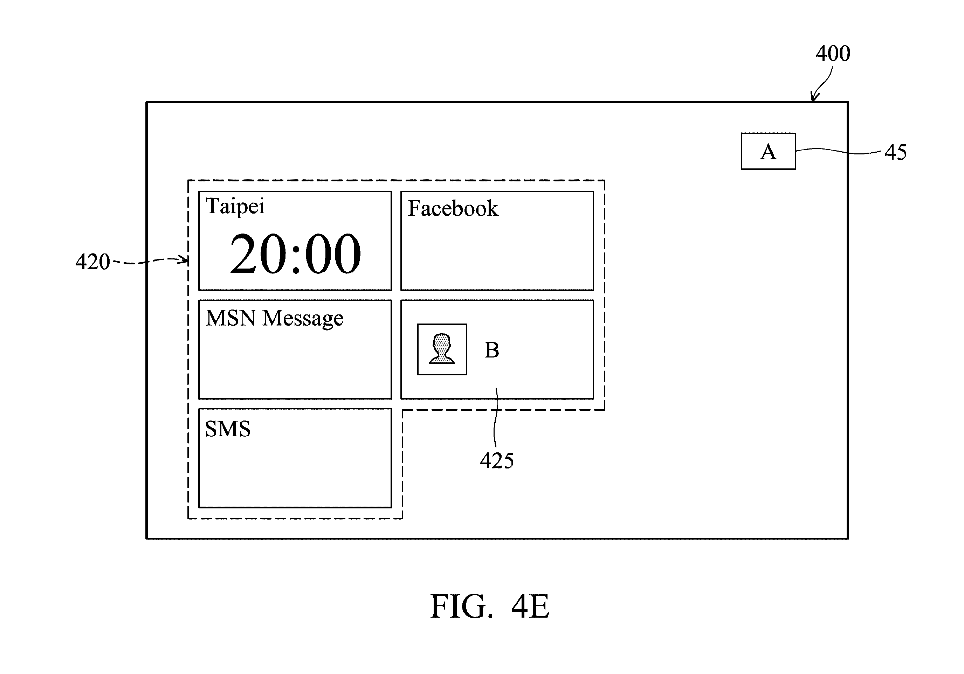

For example, in a case where more than two tile groups have been displayed on a user start screen, the newly generated social tile can be arranged in the last tile group. Referring to Fig. 4E, the tile group 420 has displayed 4 tiles, and therefore there is room for new tiles. The newly generated social tile 425 is arranged in the tile group 420. In another embodiment, a social tile corresponding to the contact person B is generated and arranged in the tile group 410, and one tile originally displayed in the tile group 410 is moved, according to a preset rule, to some other tile group. Alternatively, the tile group 410 can be rearranged as a tile group comprising 10 tiles.

In step S309, the social tile is moved in response to a user operation on the social tile 425.

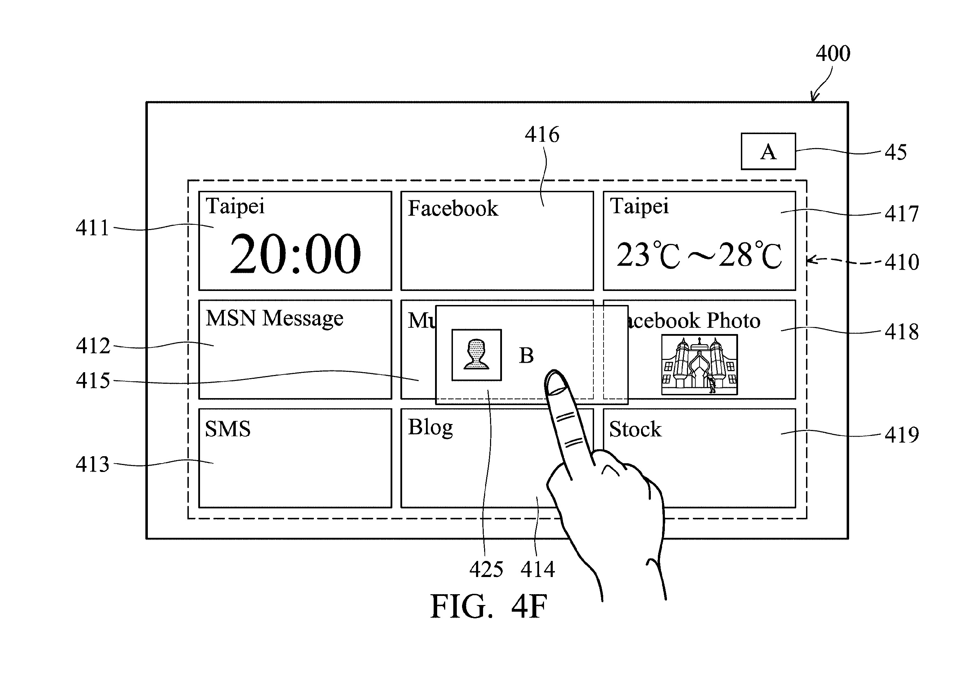

For example, the newly generated social tile 425 is moved from the tile group 420 to the tile group 410 by a drag-and-drop operation. Referring to Fig. 4F, the social tile 425 is dragged and dropped on the tile 415 of the tile group 410. In response to this drag-and-drop operation, the tile 415 is removed from the tile group 410, and the social tile 425 is displayed in the tile group 410 instead.

In step S311, contact person information corresponding to the contact person B is retrieved.

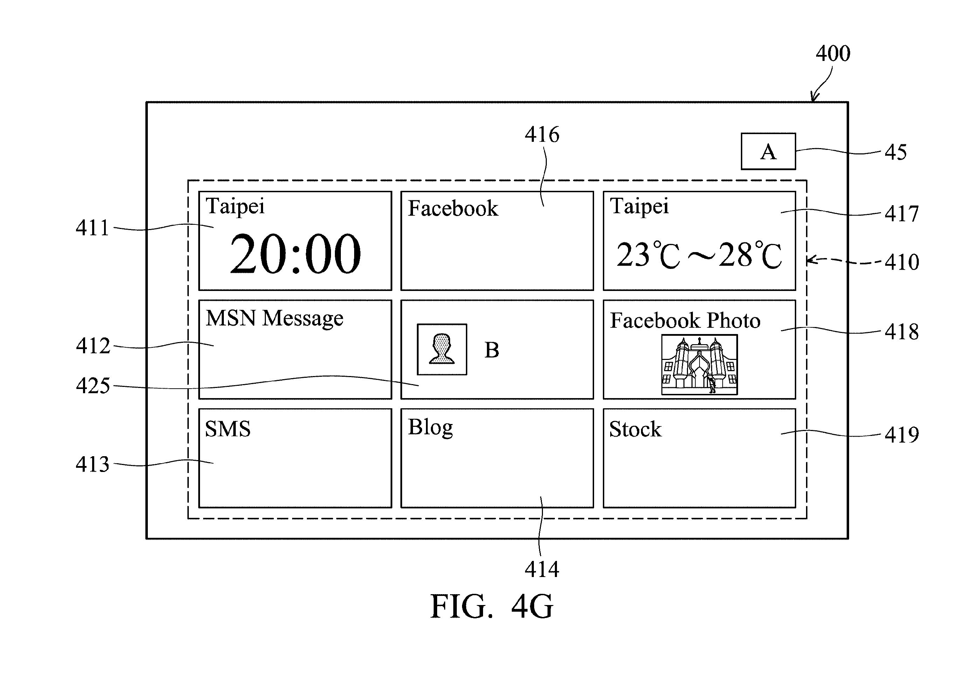

In step S313, tiles 411∼414 and 416∼419 within the tile group 410 display a current status corresponding to the contact person B according to the contact person information. Referring to Fig. 4G, according to the contact person information of the contact person B, the tile 411 shows a current local time corresponding to the location of the contact person B, the tile 412 shows MSN messages transmitted between a user and the contact person B, the tile 413 shows SMS messages transmitted between a user and the contact person B, the tile 414 shows messages that are related to the contact person B and are posted on a user's blog, social tile 425 shows a name and photograph of the contact person B, the tile 416 shows facebook messages that are related to the contact person B, the tile 417 shows the local weather corresponding to the location of the contact person B, the tile 418 shows photographs that comprise images of the contact person B and are posted on a user's facebook page, and tile 419 shows stock market information pertaining to the contact person B. The stock market information pertaining to the contact person B shown by tile 419 can be stock price data of a company for which the contact person B is working.

For example, the contact person information may comprise interests or the company the contact person is working for, wherein the interests may specify that the contact person B has an interest in movies, music, or shopping. Information relating to the interests of the contact person B can be displayed on one tile of the tile group. For example, information relating to the interests of the contact person B can be obtained by conducting a search on the Internet according to the contact person information, and shows, for example, movies soon to be shown in theaters, movie reviews, currently released record albums, hit parades, group discounts for team buying, list of popular team buying, stock market information and news. The mentioned information can be displayed alternately at a preset interval. Information, for example the hit parades, which may be given a higher weight, can be displayed with a higher frequency or be displayed for a longer period of time.

In another embodiment, an application program corresponding to a tile establishes a connection with a server according to the contact person information, for example, an account of the contact person for the application program, and accesses the server through this account. For example, the contact person B creates an account on a server corresponding to an application program and predetermines settings on the server for his account. For example, the settings specify stock codes for which the contact person B is interested, and the server transmits information pertaining to these stock codes to a device of the contact person B. The application program corresponding to the tile can retrieve information relating to the account according to the account of the application specified in the contact person information. For example, stock codes set by the contact person B is retrieved, and information relating to the stock codes is displayed on a tile. Accordingly, in response to selecting and pinning the contact person B on the start screen, the application program connects to the corresponding server, and downloads stock codes predetermined by the contact person B from the server. The information relating to the stock codes set by the contact person B is displayed on the corresponding tile, and the user can uses this information to conduct a conversation with the contact person B.

In another embodiment, a tile represents a game program, such as an on-line mahjong game. The system connects to a server corresponding to the game program for downloading information relating to the contact person B. For example, scores of the contact person B is downloaded from the server and is displayed on the tile. In addition, information indicating whether the contact person B is online or offline is also downloaded and displayed.

In step S315, the application programs corresponding to the tiles of the tile group 410 are monitored for dynamic status updates pertaining to the contact person B.

For example, the tile 412 displays a newly transmitted message in response to a new message transmitted from the selected contact person B. For example, the tile 419 displays updated stock prices in response to changes of the stock price corresponding to the company which the contact person B works for. The tile 419 can also display a new quarterly report, annual report, monthly income, or competitor information of the company.

Steps following step S305 are performed again when another contact person is to be pinned on a user start screen. Namely, another contact person (for example, contact person C) is selected from the contact list, and a pin command is received in response to user operations. Consequently, a social tile corresponding to the contact person C is generated and displayed on the screen. When the social tile of the contact person C is dragged and dropped to the tile group 410, contact person information corresponding to the contact person C is retrieved, and tiles within the tile group 410 display a current status corresponding to the contact person C.

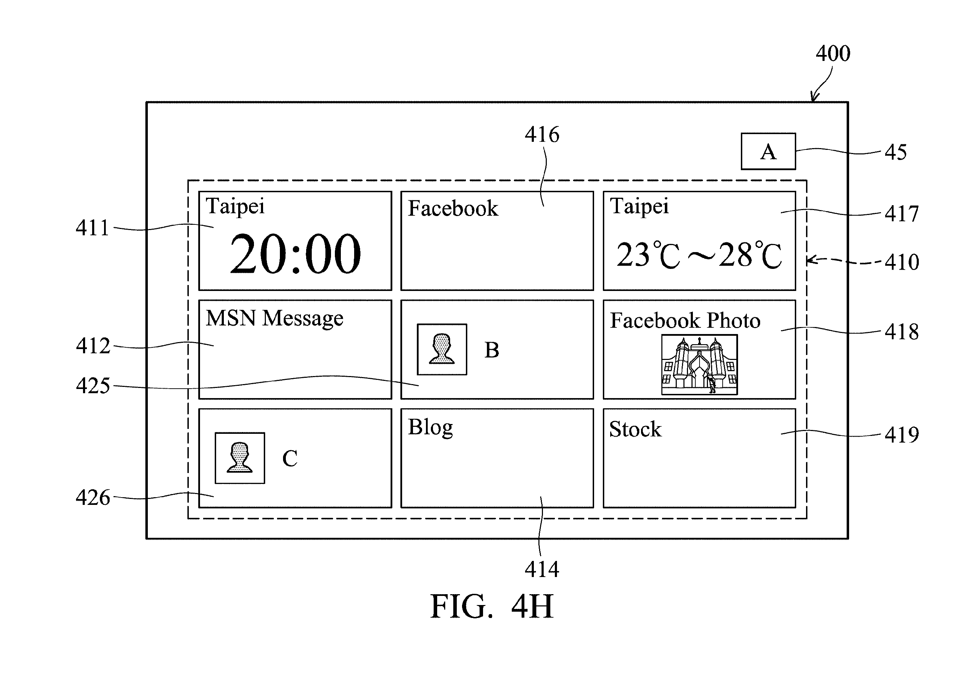

For example, referring to Fig. 4H, tiles within the tile group 410 display a current status corresponding to the contact person B and contact person C, respectively and simultaneously. For example, the tile 411 shows a current local time corresponding to the location of the contact person B and location of the contact person C, the tile 412 shows MSN messages transmitted between the user and the contact person B and the contact person C, social tile 426 displays a name and picture of the contact person C, the tile 414 shows messages that are related to the contact person B and the contact person C and are posted on a user's blog, social tile 425 shows a name and photograph of the contact person B, the tile 416 shows facebook messages that are related to the contact person B and contact person C, the tile 417 shows the local weather corresponding to the location of the contact person B and location of the contact person C, the tile 418 shows photographs that comprise images of the contact person B or contact person C and are posted on a user's facebook page, and tile 419 shows stock market information pertaining to the contact person B and contact person C. The stock market information pertaining to the contact person B and contact person C shown by tile 419 can be stock price data of a company for which the contact person B or contact person C is working.

When multiple contact persons are selected, dynamic status updates corresponding to the selected contact person are displayed alternately. In addition, since multiple contact persons are selected, each item of the dynamic status updates is marked to indicate which contact person it is related to. For example, when weather information for two distinct locations is displayed on a weather tile, each item of the weather information is marked by a photo or name of the corresponding contact person.

While the described embodiments are implemented in a smart phone, it is to be understood that the invention is not limited thereto. The present invention can be implemented in other kinds of electronic devices, such as tablets.

In addition, while the described embodiments implement a Metro mode of Windows^{™} 8, it is to be understood that the invention is not limited thereto. The present invention can be implemented in any system which implements tile-like icons showing dynamic status updates.

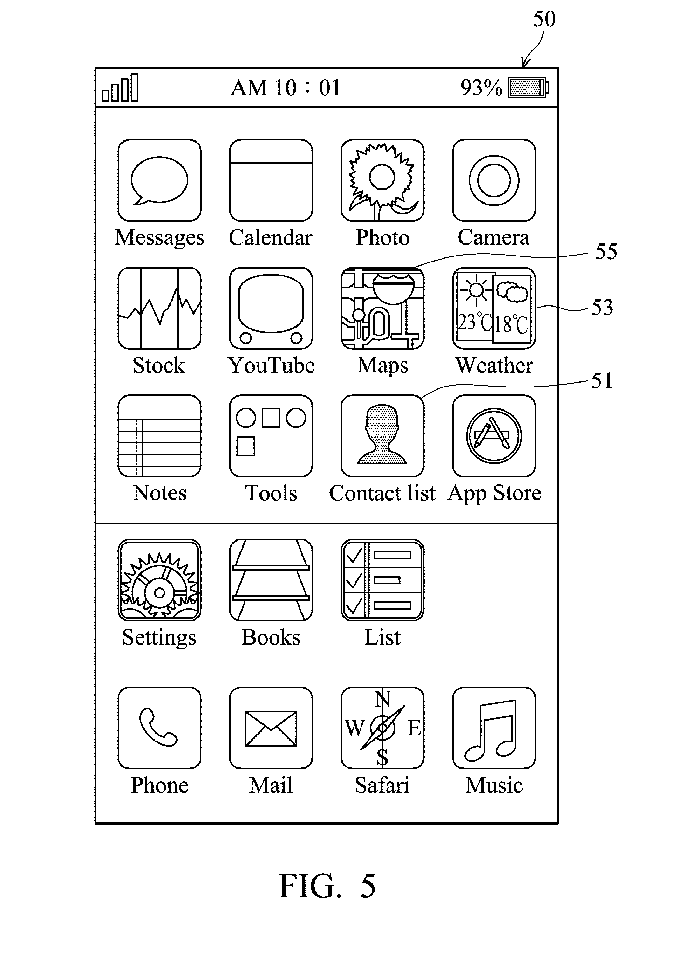

For example, referring to Fig. 5, on a display screen on an iPhone, an icon on a user start screen displays a date and weather. When an icon corresponding to a contact person is designated to be displayed on the user start screen, a contact person icon (51) is displayed on a display screen 50, and the weather icon 53 displays weather information corresponding to the locations of the user and the contact person. The current location of the contact person can also be displayed on a map icon 55, wherein the location can be a base station providing services to a portable device (such as a mobile phone) of the contact person.

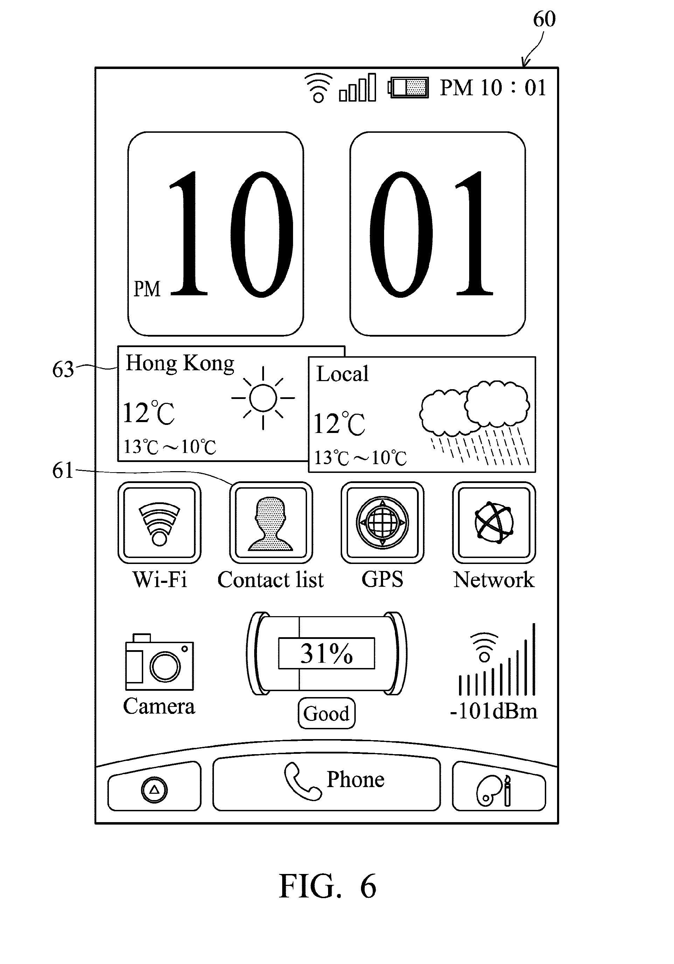

Fig. 6 provides an example for a mobile phone implementing an Android platform. In a user start screen, an icon displays the current date and weather. When an icon corresponding to a contact person is designated to be displayed on the user start screen, a contact person icon (61) is displayed on a display screen. The weather icon 63 displays weather information corresponding to the locations of the user and the contact person.

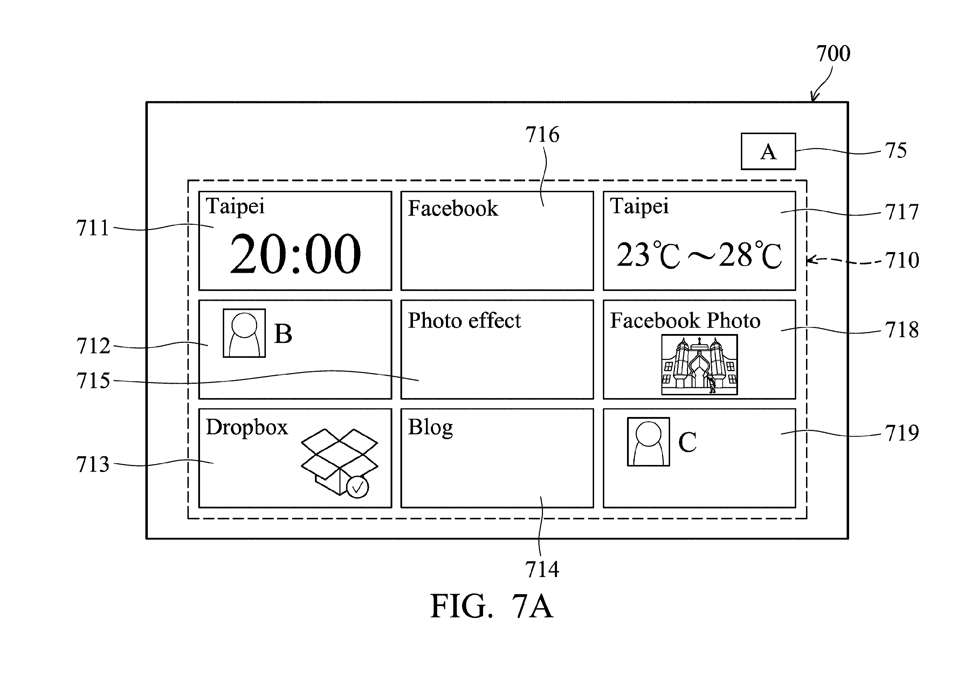

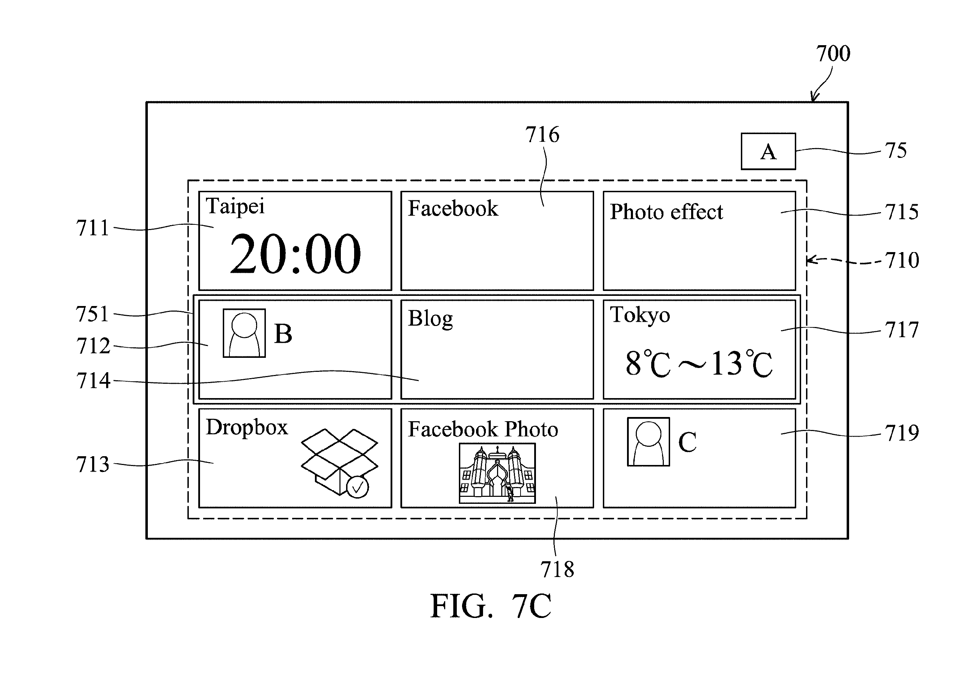

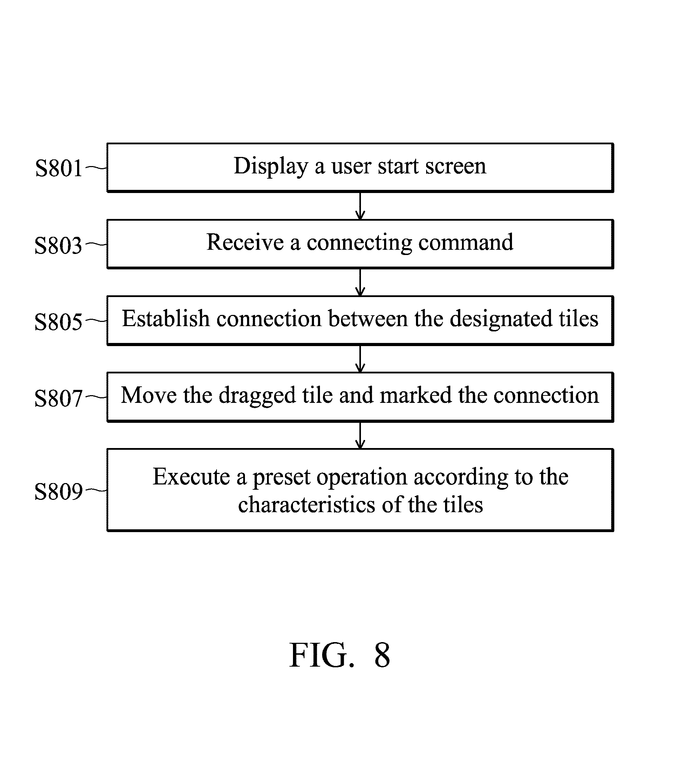

Figs. 7A∼7C are schematic diagrams illustrating user start screens according to a second embodiment of the invention. Fig. 8 is a flowchart of a first embodiment of a method according to a second embodiment of the invention. In the second embodiment, connection is established between tiles displayed on a screen display of a smart phone. Similar to the first embodiment, the second embodiment is applied in a smart phone, which is equipped with a touch-sensitive screen, and the smart phone implements an operation system released by Windows^{™} (i.e., Windows Phone). It should be noted that, though a user start screen of a smart phone is described as an example in the embodiment, the present invention is not limited to this embodiment. The present invention can be implemented in a page of any user interface, such as a page of a user interface shown on a tablet screen.

In step S801, a user start screen is displayed on a touch-sensitive display.

Referring to Fig. 7A, block 75 represents a user ID corresponding to a user A. A user start screen 700 displays a plurality of tiles 711∼719, wherein these tiles are arranged in juxtaposition to form a tile group 710. The user start screen 700 also comprises the tile group 720 (not shown) in addition to the tile group 710. Each tile group comprises at least one tile. A user can finger swipe upwardly to bring up different tile groups on the display screen.

Each of the tiles 711∼719 represents a thumb corresponding to an application program or a contact person, and shows information pertaining to the application program or the contact person, thus a user can capture the information directly from the outward appearance of the tile. For example, the tile 711 displays the local time, tile 712 displays contact person information corresponding to the contact person B, tile 713 corresponds to a cloud storage software (such as Dropbox), the tile 714 displays blog messages of the user, tile 715 corresponds to an image editing software, tile 716 displays a facebook message, tile 717 displays local weather, tile 718 displays photographs from the a user's facebook page account, and tile 719 is a social tile corresponding to the contact person C.

A connecting command is received, for establishing a connection between a tile and another tile (step S803).

The connecting command can be generated in response to a drag-and-drop operation on the tile. For example, the tile 717 is dragged and dropped on the tile 712, and a connecting command is received.

In step S805, connection between the designated tiles is established according to the connecting command.

For example, when the tile 717 is dragged and dropped on the tile 712, connection between tiles 717 and 712 is established in response to the drag-and-drop operation.

According to the embodiment, the dragged tile 717 is referred to as a 'dependent tile', and the tile 712 is referred to as an 'independent tile'. Each dependent tile corresponds to only one independent tile, while each independent tile can have more than one dependent tile.

In step S807, the dragged tile 717 (dependent tile) is moved to a position next to the tile 712 (independent tile). In addition, a mark indicating the connection between tiles 717 and 712 is displayed.

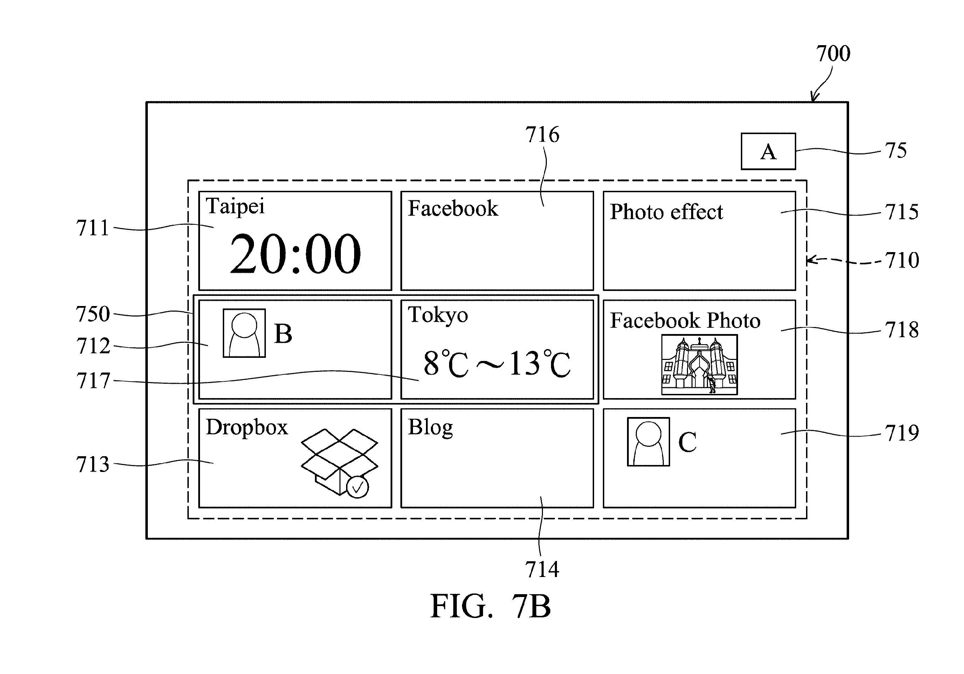

As shown in Fig. 7B, the tile 717 is moved from an upper right corner of the screen display to a position next to the tile 712. In addition, the tile 715 changes locations with the tile 717, i.e., the tile 715 is moved to the upper right corner of the screen display. A frame 750 is displayed around the tile 717 and tile 712 to indicate that the tile 717 and tile 712 are connected.

In step S809, a preset operation is executed on the tiles 717 and 712 according to the characteristics of the tiles 717 and 712.

The preset operation varies in response to characteristics of the corresponding tiles.

For example, if the tile 712 (social tile for contact person B) is the independent tile, the tile 717 (displaying local weather information) is the dependent tile, and the tile 717 displays weather information corresponding to a current location of the contact person B. In addition, the tile 717 can display weather information corresponding to both a current location of the contact person B (such as weather information for Tokyo, the location of the contact person B) and a current location of a user (such as Taipei, the location of user).

For example, if the tile 712 (social tile for contact person B) is the independent tile, the tile 713 (corresponding to cloud storage software, Dropbox) is the dependent tile, Accordingly, Dropbox transmits files stored in an account of user A to the contact person B corresponding to the tile 712. In addition, the execution authority of the contact person B against Dropbox (corresponding to the tile 713) can be reset. In response to resetting the execution authority, the contact person B has the authority to access at least one file stored on the Dropbox account of user A, or to perform predetermined operations to the Dropbox account, such as making a new file wrapper.

For example, the tile 712 (social tile for contact person B) is the independent tile, the tile 719 (social tile for contact person C) is the dependent tile, and the contact person C is given authority to access a shared file wrapper of the contact person B.

For example, the tile 715 (corresponding to an image editing software) is the independent tile, the tile 718 (displaying photographs from a user's facebook page account) is a dependent tile, and the image editing software is initiated to edit photographs stored in a user's facebook page account corresponding to the tile 718.

As described, each dependent tile corresponds to only one independent tile, while each independent tile can have more than one dependent tile. When a user wants to set some other tiles as dependent tiles of the tile 712, he or she just performs drag-and-drop operation again, and steps S805 through S809 are repeated automatically.

For example, when the tile 714 is dragged and dropped on the tile 712, a connection between tiles 714 and 712 is established in response to the drag-and-drop operation. The dragged tile 714 (dependent tile) is moved to a position next to the tile 712 (independent tile). In addition, the tile 714 changes a location with tile 718, i.e., the tile 718 is moved to a lower position of the screen display. A frame 751 is displayed around the tiles 712, 714, and 717 to indicate that the tile 712 and tiles 714 and 717 are connected.

For example, if the tile 716 (displaying facebook message) is the independent tile and tile 719 (social tile corresponding to the contact person C), the tile 716 displays current updates corresponding to a facebook account of the contact person C. If, in addition to the tile 719, the tile 716 has another dependent tile 712, then the tile 716 is displays, alternately, updates for both contact person B and contact person C.

When a user wants to undo the established connection, he or she just drags the dependent tile away from the independent tile.

For example, when a user wants to undo the connection between the tiles 717 and 712, he or she drags the tile 717 away from tile 712, i.e., drags the tile 717 out of the frame 750.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A social tile displaying method, comprising:
displaying a first tile group on a screen, wherein the first tile group comprises a plurality of tiles;
receiving a pin command designating a first contact person;
generating a social tile corresponding to the first contact person, and arranging the generated social tile in the first tile group; and
displaying a current status corresponding to the first contact person, via the tiles within the first tile group.

2. The method of claim 1, further comprising:
retrieving first contact person information corresponding to the first contact person;
displaying a current status corresponding to the first contact person, according to the first contact person information;
connecting to the Internet for searching for data pertaining to the first contact person information, and displaying the data, by one of the tiles; and
connecting to a server for downloading data pertaining to the first contact person information, and displaying the data, by one of the tiles, or displaying a current status of the first contact person according to the data;wherein the first contact person information represents a job situation or a list of interests.

3. The method of claim 1, further comprising:
receiving a pin command designating a second contact person;
receiving a second contact information corresponding to the second contact person; and
causing the tiles within the first tile group to display a current status corresponding to the second contact person;wherein displays, representing current statuses of the first and second contact persons are shown side by side on each of the tiles.

4. The method of claim 1, further comprising:
among the tiles of the first tile group, displaying, by the tile adjacent to the social tile, the current status corresponding to the first contact person, and/or displaying, by all the tiles within the first tile group, the current status corresponding to the first contact person.

5. The method of claim 1, further comprising:
displaying a second tile group on a screen, wherein the second tile group comprises a plurality of tiles;
relocating the social tile from the first tile group to the second tile group in response to a drag-and-drop operation executed by a user; and
displaying a current status corresponding to the first contact person, via the tiles within the second tile group.

6. An electronic device, comprising:
a display unit, displaying a first tile group comprising a plurality of tiles;
an input unit, receiving a pin command designating a first contact person;
a processor, generating a social tile corresponding to the first contact person, arranging the generated social tile in the first tile group, and displaying a current status corresponding to the first contact person, via the tiles within the first tile group..

7. The electronic device of claim 6, wherein the processor retrieves first contact person information corresponding to the first contact person in response to the pin command, and generates display of a current status corresponding to the first contact person according to the first contact person information, via the tiles within the first tile group.

8. The electronic device of claim 7, wherein the processor further connects to the Internet for searching for data pertaining to the first contact person information, and causes one of the tile to display the data;wherein the processor further connects to a server for downloading data pertaining to the first contact person information, and causes one of the tile to display the data or to display a current status of the first contact person according to the data;wherein the first contact person information represents a job situation or a list of interests.

9. The electronic device of claim 6, wherein:
the input unit receives a pin command designating a second contact person;
the processor generates display of a current status corresponding to the second contact person, via the tiles within the first tile group.

10. The electronic device of claim 9, wherein the processor generates the display of a current status of both the first and second contact persons, alternately on each of the tiles, via the display of the display unit.

11. The electronic device of claim 6, wherein the processor generates the display of a current status corresponding to the first contact person on the tile adjacent to the social tile, via the display of the display unit.

12. The electronic device of claim 6, wherein:
the display unit displays a second tile group comprising a plurality of tiles;
the processor relocates the social tile from the first tile group to the second tile group in response to a drag-and-drop operation executed by a user, and generates the display of a current status corresponding to the first contact person on the tiles within the second tile group, via the display of the display unit.

13. A tile connecting method, comprising:
displaying a first tile and a second tile on a screen;
receiving a first connecting command for establishing a connection between the first tile and the second tile;
establishing the connection between the first tile and the second tile according to the first connecting command; and
executing preset operation on the first tile and the second tile according to characteristics of the first tile and the second tile.

14. The method of claim 13, wherein the first connecting command is received in response to a user operation that drags the second tile and drops it on the first tile.

15. The method of claim 13, wherein the characteristics of the first tile and the second tile specify the corresponding tile is a social tile, representing a contact person or an application tile, representing application software;
wherein the preset operation is the first tile, displaying a current status corresponding to the second tile, or the second tile, displaying a current status corresponding to the first tile.

16. The method of claim 13, wherein the preset operation is the second tile, transmitting data corresponding to the second tile to the first tile, wherein the preset operation resets execution authority of the second tile against the first tile, or resets execution authority of the first tile against the second tile, and/or wherein the preset operation resets access authority of the second tile against the first tile, or resets access authority of the first tile against the second tile.

17. The method of claim 13, further comprising:
displaying a third tile on the screen;
receiving a second connecting command for establishing a connection between the first tile and the third tile;
establishing the connection between the first tile and the third tile according to the second connecting command; and
executing preset operation on the first tile and the third tile according to characteristics of the first tile and the third tile.
